Europäisches Patentamt

(19) European Patent Office

Office européen des brevets

(11) Publication number: **0 072 131**
**B1**

(12) **EUROPEAN PATENT SPECIFICATION**

(45) Date of publication of patent specification: **24.09.86**

(51) Int. Cl.⁴: **B 29 C 65/18**

(21) Application number: **82303903.7**

(22) Date of filing: **23.07.82**

(54) **Method and apparatus for sealing thermoplastics straps.**

(30) Priority: **05.08.81 GB 8123902**

(43) Date of publication of application:
**16.02.83 Bulletin 83/07**

(45) Publication of the grant of the patent:
**24.09.86 Bulletin 86/39**

(84) Designated Contracting States:
**AT BE CH DE FR GB IT LI LU NL SE**

(56) References cited:
**EP-A-0 022 615**
**DD-A- 106 591**
**DE-A-1 629 160**
**DE-A-1 909 894**
**DE-A-2 363 275**
**DE-C-1 285 384**
**DE-U-7 237 649**
**FR-A-1 246 745**
**GB-A-1 143 442**
**US-A-3 863 557**

(73) Proprietor: **INTERLAKE UK LIMITED**
**Kilnhurst near Rotherham South Yorkshire S62 5SX (GB)**

(72) Inventor: **Ford, Graham Paul**
**36 St Matthews Street**
**Cambridge (GB)**

(74) Representative: **Matthews, Heather Clare et al Keith W Nash & Co Pearl Assurance House 90-92 Regent Street**
**Cambridge CB2 1DP (GB)**

Courier Press, Leamington Spa, England.

# Description

## Field of Invention

This invention relates to a method and apparatus for heat sealing together layers of strap of thermoplastics material such as polyester and polypropylene.

## Background to the Invention

In the packaging industry, it is a common requirement to tension and secure a thermoplastics strap around the periphery of a package. In order to secure the tensioned loop, two layers of strap must be fixed together where they overlap at the common beginning and end of the loop.

Mechanical fastenings such as metal clips crimped around the two strap layers or deformable wire buckles locking to the two strap layers produce a structurally inefficient joint and are expensive to produce and handle.

Friction welding, wherein a flat or cylindrical pad is oscillated parallel to the plane of contact of the two strap layers in pressure contact therewith can also result in a structurally inefficient joint for some types of strap, especially a strap of polyester and, in addition, an uncomfortable amount of noise is generated. Furthermore, the high power required necessitates use of a compressed air or mains electric drive.

Ultra-sonic welding is equally disadvantageous, being less successful for some types of strap than others, and requiring relatively complex circuitry for providing the necessary operating power.

A known heat sealing process also demands use of a high power source external to the sealing equipment. In this process, a continuously or intermittently heated, relatively massive, heating element is caused to enter between the two layers of strap by moving said element across the strap from one longitudinal edge to the other. The two strap layers are first pressed against the heating element and then, after a short delay, the element is rapidly retracted and the two strap layers are pressed together at the heated regions thereof. This process, in addition to disadvantageously requiring an external power source, produces considerable unpleasant fumes, since the operating temperature rises to a value necessarily higher than the decomposition temperature of the strap material.

Known from German Specification No 1285384 is an arrangement for heat sealing together two traps and wherein the heating element moves in the longitudinal direction of the overlapping straps. However, fusing together is effected only at an end position of the longitudinal movement, whereat the heating element is held in position under a fusing pressure against the action of a return spring. The seal effected is therefore of relatively short length in the longitudinal direction of the straps.

Known from German Specification No 2363275 is an arrangement employing a heating element carried by a pivotally mounted arm, wherein the pivoted arm is rotated to insert the heating element laterally between two overlapping straps, and the heater assembly including the pivotally mounted arm and heater element is then displaced longitudinally to allow a fusing pressure to be applied to the straps at the heated area thereof now vacated by the heating element. Again, the seal effected is of relatively short length in the longitudinal direction of the straps.

It is an object of this invention to provide an improved method for heat sealing together two layers of thermoplastics strap, and in particular to enable a heat seal of increased longitudinal extent to be obtained.

## Summary of the Invention

According to the invention there is provided a method of heat sealing together layers of strap of thermoplastics material, according to which a thin heating element, movable in the longitudinal direction of the strap between the two strap layers, has heating current supplied thereto prior to withdrawal and while the two strap layers are being pressed together, characterised in that:

1) the heating element (16) is driven with a forward and reverse motion between the two lengths of strap (26, 28) which are to be sealed together;

2) heating current is supplied to said element substantially only during the reverse movement of said forward and reverse motion, and

3) the strap layers are pressed together throughout the length of forward and reverse motion of the heating element, applying pressure ahead of the cold heater during its forward movement and to the rear of the hot heater during its reverse movement.

Preferably the fusing pressure is maintained over said heated strap region after withdrawal of the heating element from said region until fusion between the two layers has occurred.

The speed of motion of the heating element, when supplied with heating current, is controlled so as to effect melting of the thermoplastics layers of strap without decomposition thereof.

Preferably the heating element is maintained under tension, even when hot.

According to a preferred feature of the invention a method of fusing two layers of thermoplastics material comprises the steps of:—

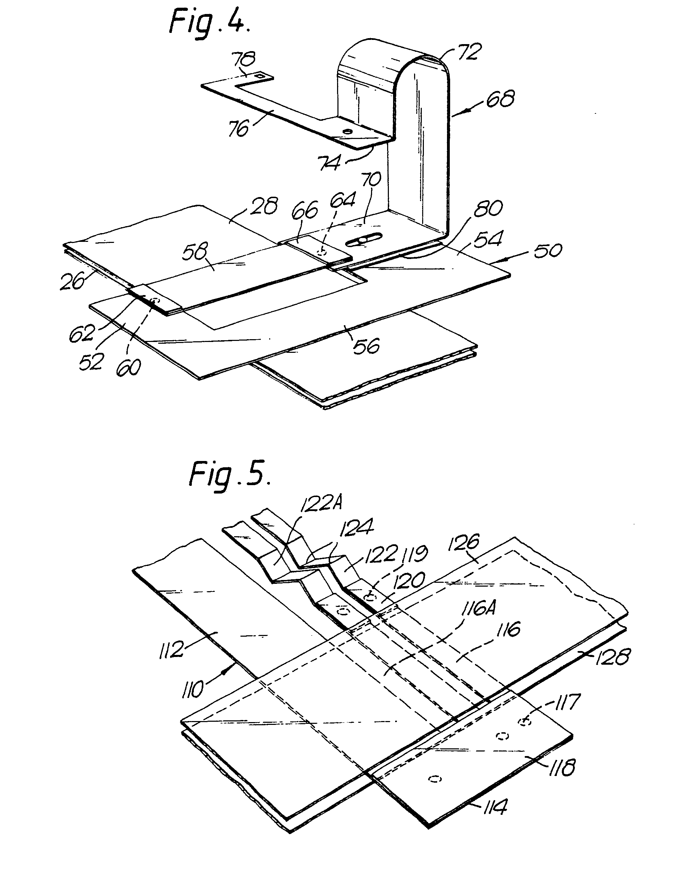

(1) a heating element sub-assembly (Fig. 4) carrying one or more said heating elements (58) is initially driven relative to the two strap layers in a first direction from a home position towards a maximum displacement position;

(2) in advance of the attainment of the maximum displacement position an electric current is caused to flow through the heating element or elements, so that the latter achieves a fusing temperature at the maximum displacement position;

(3) the sub-assembly is then caused to change direction and displacement towards the home position;

(4) the flow of current and fusing temperature during the return movement, and

(5) the strap layers are pressed together throughout the length of the heater so as to apply a fusing pressure behind the hot heater during its return movement.

The method may further comprise the step switching off the current and allowing the element or elements to cool in advance of the attainment of the home position, to inhibit fusing during the last part of the return movement.

The method may comrpise the steps of:—

(a) initiating movement of the sub-assembly from the home position for a length of time sufficient to allow the fused bond to become secure;

(b) causing the sub-assembly to move in a forward direction whilst the current remains OFF into an intermediate position at which a member lies below a knife edge, the said member occupying a position between the two layers, and

(c) effecting a movement of the knife edge so as to engage and sever the layer of material between the knife edge and the said member.

The method may further comprise the step of heating the knife edge electrically whilst the sub-assembly moves towards the intermediate position.

The method may also involve after severence, removing the heating current from the knife edge to allow the latter to cool and causing the knife edge to return to its normal position away from the layers of fused material and moving the sub-assembly in the return direction to its home position once again.

The invention also provides apparatus for carrying out the afore-described method, wherein a carriage is moved longitudinally of two layers of said strap material so as to move between said layers a thin electrical heating element supplied with heating current, characterised by means for driving the carriage with a forward and reverse motion in the longitudinal direction of the strap, and control means (176, 176A, 180, 182) operable in relation to the carriage movement for causing the heating element (58) to be so supplied with current that the layers of strap material (126, 128) become fused together only during the reverse sense of the forward and reverse motion the strap layers being pressed together with a fusing pressure, which is applied ahead of the cold heater during its forward movement and to the rear of the hot heater during its reverse movement.

Practical apparatus for heat sealing together two layers of thermoplastics strap will now be described by way of example with reference to the accompanying drawings. In connection with the practical apparatus, reference is made to European Patent Application No. 0 072 132, wherein the principal claim concerns a stretched heating element of small thermal mass such that its heating period can be closely related to the current switching actions.

*In the drawings:*—

Figure 1 diagrammatically shows a preferred heating element assembly in perspective view,

Figure 2 diagrammatically illustrates a preferred method of heat sealing a thermoplastics strap using the heating element assembly of Figure 1,

Figure 3 shows a simple power circuit for supplying heating current to the heating element,

Figure 4 diagrammatically shows another heating element assembly in perspective view,

Figure 5 diagrammatically shows another embodiment of heating element assembly in perspective view,

Figure 6 shows a further embodiment of heating element assembly,

Figure 7 shows in diagrammatic form a means for supplying electrical power to the heating element assembly,

Figure 8 diagrammatically illustrates one form of apparatus for heat sealing a thermoplastics strap using a heating and fusing assembly incorporating the sub-assembly of Figure 5 which incorporates a cutter, and

Figure 9 is a plan view to an enlarged scale of the cutter shown in Figure 8.

Detailed Description of Illustrated Embodiments

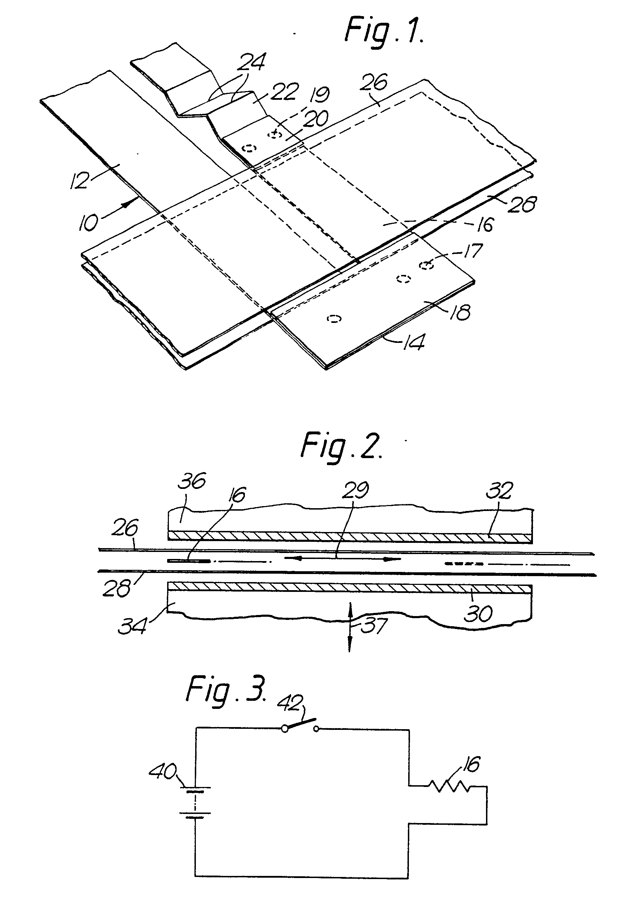

The heating element assembly in Figure 1 comprises a somewhat resilient, flat, L-shaped support 10, conveniently of stainless steel, with a long leg 12 and short leg 14. One end of a thin, flat, heating element 16, made of high resistivity, high temperature alloy such as Inconel, is spot welded, as indicated at 17, to the short leg 14 under a weld pad 18. The other end of the heating element 16 is spot welded, as indicated at 19, under a weld pad 20, to a tensioning element 22. The tensioning element 22, conveniently of stainless steel, is resiliently formed by means of concertina-type folds 24 transverse to its length. The assembly thus forms a U-shape, with the heating element 16 tensioned parallel to the long leg 12 of the L-support 10.

The complete heating element assembly is mounted to a carriage (not shown) disposed to the side of two layers 26, 28 of thermoplastics strap to be heat sealed together, so that the U-shaped assembly, and in particular the heating element 16 (and corresponding part of the long leg 12 of the L-support) can be moved transverse to its length, between the two strap layers, in the longitudinal direction of the strap.

The preferred heating element 16 of Inconel is conveniently between 0.05 mm and 0.20 mm thick, with a width of about one half its unsupported length between the L-support 10 and the tensioning element 22, the latter corresponding to the width of the strap which the heating element is designed to seal. As compared with conventional heating elements for heat sealing, the element 16 thus possesses a very low thermal mass. In Figures 1 and 2, the electrical leads to the element 16 are omitted.

While the heating element 16 supplied with heating current is moving between the strap layers 26, 28 more particularly by moving the supporting carriage with a forward and reverse motion parallel to the length of the strap, as indicated by arrow 29 in Figure 2, the two strap layers are urged together under a fusing pressure. This fusing pressure is exerted by two resilient pads 30, 32 (see Figure 2) backed by respective rigid supports 34, 36. At least one support, the support 34 for isntance and the resilient pad 30 carried thereby, is movable towards the other, as indicated by arrow 37, to enable the fusing pressure to be applied and relieved, as appropriate. Each pad 30, 32 is otherwise stationary, being wide enough to cover the full width of the strap and long enough to cover the entire stroke of reciprocation of the heating element, i.e. to cover the entire heated area of the two layers of strap.

The two layers of strap 26, 28 are thus urged together, with the moving heating element 16 sandwiched therebetween, with a substantially uniform pressure over the entire heated area. Foam rubber is a convenient material for the pads 30, 32.

As indicated in Figure 3, heating current for the heating element 16 is obtained from a source 40 of secondary cells, e.g. rechargeable sealed nickel-cadmium cells, supplied through a switch 42 operable by suitable means (not shown) to open and close in synchronism with the reversals of the forward and reverse motion of the heating element assembly. Thus, the heating element 16 is supplied with current, at least 20 amps from a 1 to 3, e.g. 2.5, voltage source, only during the reverse stroke of the forward and reverse motion. During such reverse stroke, the speed of movement of the heating element is carefully controlled, taking into account the materials involved, so that no part of the heating element assembly is heated as high as the decomposition temperature of the strap material. This is facilitated by use of the thin flat heating element of low thermal mass, the entire heating area of which is sandwiched between the two strap layers under the fusing pressure, so that heat is extracted from the hating element assembly at a rate which maintains the heated regions of the strap layers at a temperature only a little above the melting point of the thermoplastics material concerned.

Preferably, the fusing pressure is applied only during the reverse stroke of the forward and reverse motion of the heating element, while heating is taking place. For this purpose, the pad 30 may be automatically moved to the fusing pressure position at the beginning of a reverse stroke.

At the end of the reverse stroke of the heating element, the heating element assembly is retracted from the heated region of the strap whilst the fusing pressure is maintained until the melted thermoplastics material has resolidified, fusing the two strap layers together. Simultaneously, of course, the heating current is cut off, thereby to ensure that the element does not overheat.

A seal about 30 mm long (along the length of the strap) can be effected in about one second. Such a seal in a typical case will have strength of at least 60 per cent of the parent material. However, means will be provided to adjust the length of seal i.e. the length of the stokes of the forward and reverse movement of the heating element, since some variation of the length of seal will be required in accordance with differing widths of strap.

The above description assumes that a seal can be completed with a single cycle of reciprocation (foward and reverse motion) of motion of the heating element assembly. However, although unlikely to be required, preliminary heating strokes to initiate softening of a thermoplastics material of relatively high melting point can be carried out. In this case, the fusing pressure will be applied only during the final reverse stroke.

The heating element assembly of Figure 4 comprises a somewhat resilient, flat, U-shaped support 50, conveniently of cold rolled, stainless steel, with short limbs 52 and 54 connected by a long cross-piece 56. One end of a thin, flat, heating element 58, (corresponding to item 16 in Figure 1) and made of high resistivity, high temperature alloy such as Inconel, is spot welded, as indicated at 60, to the limb 52 under a weld pad 62. The other end of the heating element 58 is spot welded, as indicated at 64, under a weld pad 66, to a tensioning element 68. The tensioning element 68, conveniently of Berylium-copper alloy is formed with a foot 70, to which the heating element 58 is welded at 64, which foot is elongated rearwardly away from the heating element. Upstanding from the foot 70 the tensioning element 68 has an intermediate U-portion 72, the limxs of which can flex towards and away from one another generally in line with the length of the heating element 58, and a forwardly extending end portion 74 which is fixed as by welding to a relatively rigid, electrical contact element 76 of L-shape. The contact element 76 extends generally laterally, with a piece 78 at its most lateral end extending rearwardly to enable anchorage thereof in a manner which tensions the heating element 58. In use, current for the heating element 58 is supplied through this contact element 76 and the spring tensioning element 68. The foot 70 of the tensioning element 68 is therefore electrically insulated, as by an insulating pad 80 over which it can slide, from the limb 54 of the support 50. In use, when the thin heating element 58 expands due to heating thereof, the tensioning element is able to flex to maintain the tension in said heating element which is essential to avoid risk of buckling.

The complete heating element assembly shown in Figure 4 is mounted to a carriage (not shown) disposed to the side of two layers 26, 28 of thermoplastics strap to be heat sealed together, so that the U-shaped assembly, and in particular the heating element 58 (and corresponding part of the long crosspiece 56 of the U-support 50) can be moved transverse to its length, between the two strap layers, in the longitudinal direction of the strap. It is the fixing of the contact element 76 to this carriage which ensures that the heating element 58 is always properly tensioned.

The preferred heating element 58 of Inconel is conveniently between 0.05 mm and 0.20 mm thick, with a width of at most about one half its unsupported length between the limb 52 of the U-support 50 and the tensioning element 68, the latter being slightly wider than the width of the strap which the heating element 58 is designed to seal. As compared with conventional heating elements for heat sealing, the element 58 thus possesses a very low thermal mass. The electrical leads to the elements 58 and 76 are omitted. Although a range of 0.05 mm to 0.20 mm has been suggested for the element thickness there are many situations where a thicker element would be preferable such as in a bench mounted machine where a thickness of e.g. 0.40 mm or more may be used.

While the heating element 58 supplied with heating current is moving between the strap layers 26, 28 more particularly by moving the supporting carriage with a forward and reverse motion parallel to the length of the strap, in a similar manner as previously described for Figures 1 and 2 the two strap layers are urged together under a fusing pressure. This fusing pressure is exerted by two resilient pads 30, 32 backed by respective rigid supports 34, 36. At least one support, the support 36 for instance and the resilient pad 30 carried thereby, is movable towards the other, as indicated by arrow 37, to enable the fusing pressure to be applied and relieved, as appropriate. Each pad 30, 32 is otherwise stationary, being wide enough to cover the full width of the strap and long enough to cover the entire stroke of reciprocation of the heating element, i.e. to cover the entire heated area of the two layers of strap.

The two layers of strap 26, 28 are thus urged together, with the moving heating element 58 sandwiched therebetween, with a substantially uniform pressure over the entire heated area. Foam rubber is a convenient material for the pads 30, 32.

The heating element assembly of Figure 5 comprises a somewhat resilient, flat, L-shaped support 110, conveniently of stainless steel, with a long leg 112 and short leg 114. One end of each of a pair of thin, flat, elongated heating elements 116, 116A, made of high resistivity, high temperature alloy such as Inconel, is spot welded, as indicated at 117, to the short leg 114 under a weld pad 118. The heating elements 116, 116A are disposed in parallel relationship. The other end of each heating element 116, 116a is spot welded, as indicated at 119, under a weld pad 120, to a corresponding tensioning element 122, 122A. The tensioning elements 122, 122A conveniently of stainless steel, are each resiliently formed by means of concertina-type folds 124 transverse to its length. The assembly thus forms a W-shape, with the heating elements 116, 116A tensioned parallel to the long leg 112 of the L-support 110.

The complete heating element assembly is mounted to a carriage (not shown) disposed to the side of two layers 126, 128 of thermoplastics strap to be heat sealed together, so that the W-shaped assembly, and in particular the heating elements 116, 116A (and corresponding part of the long leg 112 of the L-support) can be moved transverse to its length, between the two strap layers, in the longitudinal direction of the strap.

The preferred heating elements 116, 116A of Inconel are each conveniently between 0.05 mm and 0.20 mm thick, with a width of at most one quarter its unsupported length between the L-support 110 and the corresponding tensioning element 122, 122A, the latter corresponding to the width of the strap which the heating element is designed to seal. As compared with conventional heating elements for heat sealing, the elements 116, 116A thus possess a very low thermal mass. In Figure 5 the electrical leads to the elements 116, 116A are omitted. Although a range of 0.05 mm to 0.20 mm has been suggested for the element thickness there are many situations where a thicker element would be preferable such as in a bench mounted machine where a thickness of e.g. 0.40 mm or more may be used.

Moreover, as compared to the single heating element proposed earlier the two elements 116, 116A of increased current path length can have increased thickness, for equivalent resistance, or can operate at higher voltage and lower current for the same power.

While the heating elements 116, 116A supplied with heating current are moving between the strap layers 126, 128 more particularly by moving the supporting carriage with a forward and reverse motion parallel to the length of the strap, in the same manner (as indicated in Figure 2), the two strap layers are urged together under a fusing pressure.

The heating current for the heating elements 116, 116A is obtained from a source of secondary cells, e.g. rechargeable sealed nickel cadmium cells, supplied through a switch 142 operable by suitable means (not shown) to open and close in synchronism with the reversals of the forward and reverse motion of the heating element assembly. Thus the heating elements 116, 116A are supplied with current, at least 20 amps, (typically 40A) from a voltage source, of typically 5v only during the reverse stroke of the forward and reverse motion. During such reverse stroke, the speed of movement of the heating elements is carefully controlled, taking into account the materials involved, so that no part of the heating element assembly is heated as high as the decomposition temperature of the strap material. This is facilitated by use of thin flat heating elements of low thermal mass, the entire heating area of which is sandwiched between the two strap layers under the fusing pressure, so that heat is extracted from the heating element assembly at a rate which maintains the heated regions of the strap layers at a temperature only a little above the melting point of the thermoplastics material concerned.

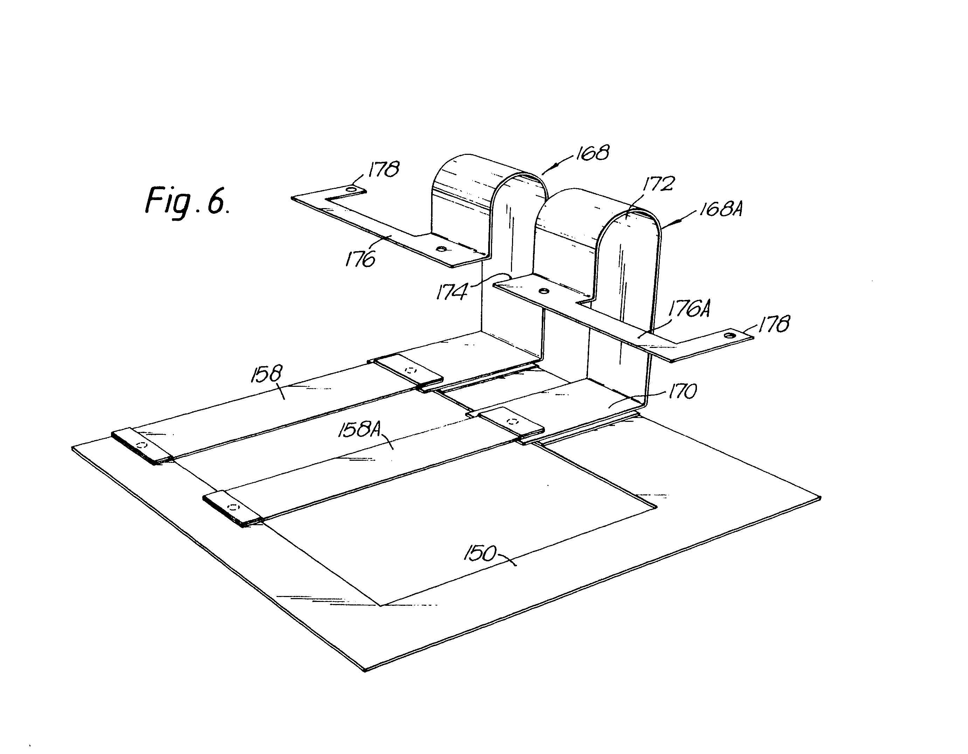

Figure 6 shows a modified heating assembly incorporating a U-shaped tensioning element wherein the tensioning elements 122, 122A of Figure 5 are replaced by springs 168, 168A of the construction illustrated, each having a foot 170, an intermediate U-portion 172 and an end portion 174 which is fixed to or integral with a laterally branched electrical contact 176, 176A. In use, current is supplied to the heating elements 58, 58A through these contacts 176, 176A respectively, the feet 170 of the springs 168, 168A being insulated from the support 150 which is movable by the carriage. The contacts 176, 176A are anchored at 178 in order to maintain tension in the heating elements 158, 158A, even when hot. The contacts 176, 176A conveniently project laterally to opposite sides in order to facilitate non-interfering electrical connections.

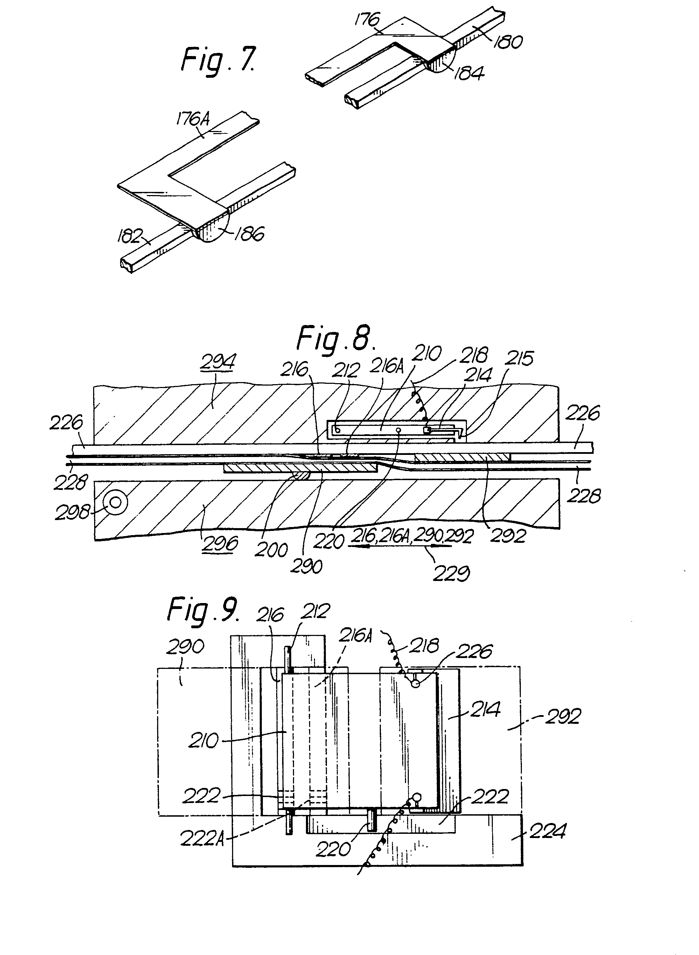

Figure 7 shows a means of anchoring the connectors 176, 176A which at the same time provides the means by which electrical power is supplied to the heating elements.

In Figure 7 two conductor rails 180, 182 are shown which are fixedly carried, parallel to the direction of reciprocation of the heating assembly carriage, by the structure, e.g. tool body, relative to which the carriage is reciprocable. Each connector 176, 176A carries a contact 184, 186, respectively, which engages behind the corresponding rail 180, 182, thus tensioning the springs 168, 168A (see earlier Figures). At the same time the contacts, which are preferably plated with a conductive metal such as silver, platinum, gold, copper or the like, makes electrical engagement with the conductor rails, with a contact pressure corresponding to the tension introduced into the springs. Power is supplied, as from a power circuit of Figure 3, to the conductor rails 180, 182, whereby in use heating current is supplied to the heating elements 158, 158A through the contacts 184, 186 and connectors 176, 176A.

As previously described, current is only supplied during the reverse sense of reciprocation. The forward stroke provides a wiping movement of the contacts 184, 186 along the rails 180, 182 which has a self-cleaning effect.

Although described particularly with reference to the heating element assembly of Figure 6 the current supply means of Figure 7 is also applicable to other heating element assemblies such as those shown in earlier Figures, simply by providing suitable connectors, equivalent to the connectors 176, 176A, of the one or more heating elements or tensioning elements. In this case, however, the connectors may or may not also serve as anchorages for the one or more tensioning elements.

Figure 8 shows diagrammatically the components of a heating and fusing assembly based on the device shown in Figure 5 which is mounted for reciprocable movement. It includes, in addition to the heating element sub-assembly, conveniently references 216, 216A, a stainless steel pressure pad 290 and a stainless steel separator plate 292. The heating and fusing assembly is reciprocable in a plane disposed between upper and lower platens 294, 296. The upper platen 294 is fixed and the lower platen 296, which supports the spring steel pressure plate 290, is pivotable about pivot means 298 to enable the fusing pressure to be applied and to be relieved after heat sealing has been completed. The upper platen 296 can in itself be considered to constitute a fixed pressure pad. Figure 8 is especially concerned with the configuration of the reciprocable assembly when the platens are closed.

First, heating current is supplied to the heating elements 216, 216A only in one sense of the forward and reverse motion, this being the reverse left to right stroke as shown in Figure 8. The separator plate 292 thus acts to separate the two layers of thermoplastics strap 226, 228 before the opposed facing surface regions thereof are heated by the heating elements 216, 216A to effect melting without decomposition of the thermoplastics material. The pressure pad 290, overlaps the heating element sub-assembly 216, 216A, and has mounted on its underside a fulcrum 200 which allows the pad 290 to rock relative to the platen 296. In this way a differential force can be exerted by the pad 290 on the layer 228. The presence of the elements 216, 216A causes the pad 290 to rock in a clockwise manner so as to increase the squeezing pressure on the material trailing the heating elements as the sub-assembly of elements 216, 216A etc., moves to the right, so as to ensure sufficient pressure to cause bonding of the strap material.

As mentioned earlier the heating current for the heating elements 216, 216A connected in series is obtained (as shown in Figure 3) from a source 40 of secondary cells, e.g. rechargeable sealed nickel-cadmium cells, supplied through a switch 42 operable by suitable means (not shown) to open and close in synchronism with the reversals of the forward and reverse motion of the heating element assembly. Thus the heating elements 216, 216A are supplied with current, at least 20 amps, (typically 40A) from a voltage source, of typically 5 v only during the reverse stroke of the forward and reverse motion.

Figure 8 also shows a cutter mechanism which is incorporated into the apparatus for severing one strap layer, i.e. that extending from a supply reel, without severing the other, after heat sealing has taken place. Detail of this cutting means is also shown in Figure 9.

An insulating carrier board 210 is carried by a fixed pivot 212 above the line of the strap layers 226, 228 between which is movable the above described heating and fusing assembly, which includes the heating elements 216, 216A and the separator plate 292. The board 210 carries a knife 214 having a severing edge 215 which extends across the full width of the strap. Flying leads 218 connect to opposite ends of the knife 214 so that severing can be effected, at the appropriate time, by a heated knife edge. This requires less mechanical effort than a mechanical guillotine, which is to be less preferred.

In the rest position in which strap loading and unloading is carried out, the board 210 is spring urged about the privot 212 so that the knife edge 215 is biased upwardly away from the strap layers beneath it.

While heated, it is lowered to effect severing by means of an actuating finger 220 carried by the board 210 and which can engage a ramp surface 222 formed on the carriage 224 which effects reciprocation of the heating and fusing assembly.

In order that the heated knife edge 215 will sever only one layer (the upper layer 226) of the strap layers, its severing action is appropriately synchronised with the forward and reverse movement of the heating and fusing assembly. As previously mentioned, heating and fusing is effected during the reverse stroke of the reciprocation, left to right as shown in Figure 8. The knife assembly is located so that, at the end of this reverse stroke after heating and fusing has been completed, the knife edge 215 is disposed at least approximately above either one of the heating elements 216, 216A or the separator plate 292. (See later description of sub-assembly cycle.) This solid element, 216, 216A or 292, thus affords a backing for the knife between the two strap layers 226, 228.

It is important that the knife edge is parallel to the plane of the strap.

It is also to be noted that severing is effected after heating and fusing has been completed, i.e. after the heating current to the heating elements 216, 216A has been switched off. (See sub-assembly cycle description later).

The knife 214 is preferably made of Inconel, which can readily be welded to contacts 226 of Berylium copper to which the flying leads 218 are connected. The knife 214 is preferably intermittently heated, by means of a suitable switch synchronised to the reciprocating motion of the carriage.

*Heating element sub-assembly cycle:—*

1. Sub-assembly moves forward (from a home position) to a maximum displaced position.

2. Slightly before reaching this maximum position, the electric current is turned on and the element or elements begin to warm up to the fusing temperature.

3. During the return movement (towards the home position) the high temperature of the element or elements causes the two layers of material to fuse behind it.

4. Just before the sub-assembly reaches the home position the current is switched off thus allowing the element or elements to begin to cool down so inhibiting fusing of the two layers over the final phase of the displacement.

5. The sub-assembly pauses at the home position for a length of time sufficient to cure the bond caused by the fusing.

6. The sub-assembly is then driven in the forward direction once again, while the current remains OFF, until it occupies an intermediate position in which the element or one of the elements in the separator plate 292 lies under the heated knife edge 215. (Preferably the leading element is located below the edge 215 so as to reduce the length of the tab of unfused material which will be left after securing.)

7. The electrical current of the knife edge 215 is initiated as soon as the sub-assembly starts to move towards its intermediate position and after severance the current for the knife edge is turned-off.

8. After severance the sub-assembly moves in the return direction once again to return to its home position, from where the cycle can begin again.

The above described apparatus may be used in a packaging method which comprises the following successive steps: 1) position carton; 2) loop strap around carton; 3) load strap into securing tool; 4) take up slack; 5) tension strap; 6) heating seal/cut-off strap; 7) release. If the device is incorporated into a hand tool, the tool is removed. If it is incorporated in the operating head of a stationary stripping machine, the pack is removed from the machine. Thus, in practice, the illustrated apparatus may be combined with a strap tensioner and strap cutter.

The present invention is applicable to all types of thermoplastics strap, substantially regardless of width, colour or thickness, especially straps up to 30 mm width and 1.5 mm thickness.

Clearly, various modifications are possible within the scope of the invention as defined by the claims. For example, the heating element assembly may utilise various metallic materials other than those specified. In particular, the heating element may be made of an austenitic stainless steel or a Brightray alloy. In some circumstances the resilient pads applying the fusing pressure may be replaced by spring-urged, relatively rigid pads. However, for the fusing of straps with crowned or barrel-shaped surfaces across their width, the use of resilient pads will be desirable to ensure close contact between such strap surfaces. The heating element may be maintained under tension in various ways other than a tensioning element having concertina-type folds. In general, various different and modified arrangements are possible in accordance with the invention, the scope of which is defined by the appended claims.

**Claims**

1. A method of heat sealing together layers of strap of thermoplastics material, according to which a thin heating element, movable in the longitudinal direction of the strap between two strap layers, has heating current supplied thereto prior to withdrawal and while the two strap layers are being pressed together, characterised in that:

1) the heating element (16) is driven with a forward and reverse motion between the two lengths of strap (26, 28) which are to be sealed together;

2) the heating current is supplied to said element substantially only during the reverse movement of said forward and reverse motion, and

3) the strap layers are pressed together throughout the length of forward and reverse motion of the heating element, applying pressure ahead of the cold heater during its forward movement and to the rear of the hot heater during its reverse movement.

2. A method according to claim 1, characterised in that the fusing pressure is maintained over said heated strap region after withdrawal of the heating element from said region until fusion between the two layers has occurred.

3. A method according to claim 1 or claim 2, characterised in that the speed of motion of the heating element, when supplied with heating current, is controlled to effect melting of the thermoplastics layers of strap without decomposition thereof.

4. A method according to any of claims 1 to 3, characterised in that the heating element is maintained under mechanical tension, even when hot.

5. A method as claimed in claim 1, characterised in that:—

1) a heating element sub-assembly (Fig. 4) carrying one or more said heating elements (58) is initially driven relative to the two strap layers in a first direction from a home position towards a maximum displacement position;

2) in advance of the attainment of the maximum displacement position an electric current is caused to flow through the heating element or elements, so that the latter achieves a fusing temperature at the maximum displacement position;

3) the sub-assembly is then caused to change direction and is driven to return from the position of maximum displacement towards the home position;

4) the flow of current and fusing temperature is maintained during the return movement, and

5) the strap layers are pressed together throughout the length of the heater so as to apply a fusing pressure behind the hot heater during its return movement.

6. A method as claimed in claim 5, further characterised by the step of switching off the current and allowing the element or elements to cool in advance of the attainment of the home position to inhibit fusing during the last part of the return movement.

7. A method as claimed in claim 5 further characterised by the steps of:

1) initiating movement of the sub-assembly from the home position for a length of time sufficient to allow the fused bond to become secure;

2) causing the sub-assembly to move in a forward direction whilst the current remains OFF into an intermediate position at which a knife edge (215) is located above a member occupying a position between the two layers, and

3) effecting a movement of the knife edge so as to engage and sever the layer of material between the knife edge and the said member.

8. A method as claimed in claim 7 further characterised by the step of heating the knife edge electrically whilst the sub-assembly moves towards the intermediate position.

9. A method as claimed in claim 7 characterised in that the said member is a said heating element (216, 216A).

10. A method as claimed in claim 7 characterised in that the said member is a separating plate (292).

11. A method as claimed in claim 8 which is characterised by the step, after severance, of removing the heating current from the knife edge to allow the latter to cool and causing the knife edge to return to its normal position away from the layers of fused material, and moving the sub-assembly in the return direction to its home position once again.

12. Apparatus for carrying out the method of claim 1, wherein a carriage is moved longitudinally of two layers of said strap material so as to move between said layers a thin electrical heating element supplied with heating current, characterised by means for driving the carriage with a forward and reverse motion in the longitudinal direction of the strap, and control means operable (176, 176A, 180, 182) in relation to the carriage movement for causing the heating element (58) to be so supplied with current that the layers of strap material (126, 128) become fused together only during the reverse sense of the forward and reverse motion the strap layers being pressed together with a fusing pressure, which is applied ahead of the cold heater during its forward movement and to the rear of the hot heater during its reverse movement.

13. Apparatus according to claim 12, for carrying out the method of claim 7, characterised in that the control means (176, 176A, 180, 182) is operable to switch on the heating current so that the heating element (58) attains the fusing temperature at the maximum displacement position.

14. Apparatus according to claim 13, characterised in that the control means (176, 176A, 180, 182) is operable to switch off the heating current in advance of attainment of the home position.

15. Apparatus according to any of claims 12 to 14, characterised in that, after attainment of the home position, the driving means is operable to move the carriage to an intermediate position at which one layer of strap (226) material is severed adjacent the seal by a knife edge (215).

16. Apparatus according to claim 15, characterised in that the knife edge (215) is operable against a member (292 or 216, 216A) disposed between the two strap layers.

17. Apparatus according to claim 16, characterised in that said member is a heating element (216 or 216A).

18. Apparatus according to claim 16, characterised in that said member is a separator plate (292) reciprocable with the carriage.

## Revendications

1. Procédé de soudage à chaud d'épaisseurs d'un ruban en matière thermoplastique, selon lequel un élément chauffant mince, mobile dans la direction longitudinale du ruban entre les deux épaisseurs du ruban est alimenté en courant de chauffage avant son retrait et alors que les deux épaisseurs du ruban sont pressées l'une contre l'autre, caractérisé en ce que:

1) l'élément chauffant (16) est entraîné selon un mouvement vers l'avant et vers l'arrière entre les deux longueurs de ruban (26, 28) qui doivent être soudées l'une à l'autre;

2) le courant de chauffage est appliqué audit élément sensiblement seulement pendant le mouvement de retour dudit mouvement vers l'avant et vers l'arrière, et

3) les épaisseurs du ruban sont pressées ensemble sur toute la longueur du mouvement vers l'avant et vers l'arrière de l'élément chauffant, en appliquant la pression à l'avant de l'élément chauffant à l'état froid pendant son mouvement vers l'avant et à l'arrière de l'élément chauffant à l'état chaud pendant son mouvement inverse.

2. Procédé selon la revendication 1, caractérisé en ce que la pression de fusion est maintenue sur ladite région chauffée des rubans après retrait de l'élément chauffant de ladite région jusqu'à ce que la fusion ait lieu entre les deux épaisseurs.

3. Procédé selon la revendication 1 ou 2, caractérisé en ce que la vitesse du mouvement de l'élément chauffant, lorsqu'il est alimenté en courant de chauffage, est commandée de manière à réaliser la fusion des épaisseurs du ruban en matière thermoplastique sans que celle-ci se décompose.

4. Procédé selon l'une quelconque des revendications 1 à 3, caractérisé en ce que l'élément chauffant est maintenu à l'état tendu, même quand il est chaud.

5. Procédé selon la revendication 1, caractérisé en ce que:

1) un sous-ensemble à éléments chauffants (figure 4) supportant un ou plusieurs desdits éléments chauffants (58) est initialement entraîné par rapport aux deux épaisseurs du ruban dans une première direction depuis une position de repos vers une position de déplacement maximale;

2) avant de parvenir à la position de déplacement maximale, un courant électrique est envoyé à l'élément chauffant ou aux éléments chauffants de manière que ces derniers parviennent à une température de fusion dans la position de déplacement maximale;

3) le sous-ensemble est alors amené à changer de direction et à se déplacer en direction de la position de repos;

4) le passage du courant et la température de fusion sont maintenus pendant le mouvement de retour, et

5) les épaisseurs du ruban sont pressées ensemble sur toute la longueur de l'élément chauffant de manière à appliquer une pression de fusion à l'arrière de l'élément chauffant à l'état chaud pendant son mouvement de retour.

6. Procédé selon la revendication 5, caractérisé en ce qu'il comprend en outre l'opération consistant à arrêter le courant et à permettre à l'élément ou aux éléments de se refroidir avant de parvenir à la position de repos, pour inhiber la fusion pendant la dernière partie du mouvement de retour.

7. Procédé selon la revendication 5, caractérisé en ce qu'il comprend les opérations suivantes:

1) initialisation du mouvement du sous-ensemble depuis la position de repos pendant une durée suffisante pour permettre à la jonction fondue de devenir résistante;

2) amener le sous-ensemble à se déplacer vers l'avant alors que le courant reste coupé dans une position intermédiaire dans laquelle un élément est situé au-dessous de l'arête (215) d'un couteau, ledit élément occupant une position entre les deux épaisseurs, et

3) faire effectuer un mouvement à l'arête du couteau de manière qu'elle vienne en contact et sectionne l'épaisseur de matériau entre l'arête du couteau et ledit élément.

8. Procédé selon la revendication 7, caractérisé en ce qu'il comprend l'opération consistant à chauffer électriquement l'arête du couteau alors que le sous-ensemble se déplace en direction de la position intermédiaire.

9. Procédé selon la revendication 7, caractérisé en ce que ledit élément est l'un desdits éléments chauffants (216, 216A).

10. Procédé selon la revendication 7, caractérisé en ce que ledit élément est une plaque de séparation (92).

11. Procédé selon la revendication 8, caractérisé en ce qu'après le sectionnement a lieu le retrait du courant de chauffage de l'arête du couteau pour permettre à cette dernière de se refroidir et de faire revenir l'arête du couteau vers sa position normale qui est éloignée des épaisseurs de matériau fondu et déplacer le sous-ensemble dans la direction du retour, à nouveau vers sa position de repos.

12. Dispositif pour mettre en oeuvre le procédé selon la revendication 1, dans lequel un chariot est déplacé longitudinalement par rapport à deux épaisseurs dudit ruban de façon à déplacer entre lesdites épaisseurs un mince élément électriquement chauffant alimenté en courant de chauffage, caractérisé par des moyens pour entraîner le chariot selon un mouvement vers l'avant et vers l'arrière dans la direction longitudinale du ruban, et des moyens de commande (176, 176A, 180, 182) pouvant être actionnés en fonction du mouvement du chariot pour amener l'élément chauffant (58) à être alimenté en courant pour que les épaisseurs (126, 128) du ruban ne se fondent ensemble que pendant le retour du mouvement vers l'avant et vers l'arrière, les épaisseurs du ruban étant pressées ensemble sous une pression de fusion qui est appliquée à l'avant de l'élément chauffant à l'état froid pendant son mouvement vers l'avant et à arrière de l'élément chauffant à l'état chaud pendant son mouvement inverse.

13. Dispositif selon la revendication 12 pour mettre en oeuvre le procédé de la revendication 7, caractérisé en ce que les moyens de commande (176, 176A, 180, 182) permettent d'appliquer le courant de chauffage de manière que l'élément chauffant (58) atteigne la température de fusion dans sa position de déplacement maximale.

14. Dispositif selon la revendication 13, caractérisé en ce que les moyens de commande (176, 176A, 180, 182) permettent de couper le courant de chauffage avant que soit atteinte la position de repos.

15. Dispositif selon l'une quelconque des revendications 12 à 14, caractérisé en ce que lorsque la position de repos a été atteinte, les moyens d'entraînement permettent de déplacer le chariot vers une position intermédiaire dans laquelle une épaisseur de ruban (226) est sectionnée dans une région adjacente à la soudure par une arête (215) d'un couteau.

16. Dispositif selon la revendication 15, caractérisé en ce que l'arête (215) du couteau peut être actionnée contre un élément (292, 216, 216A) disposé entre les deux épaisseurs de ruban.

17. Dispositif selon la revendication 16, caractérisé en ce que ledit élément est un élément chauffant (216 ou 216A).

18. Dispositif selon la revendication 16, caractérisé en ce que ledit élément est une plaque séparatrice (292) pouvant effectuer un mouvement de va-et-vient avec le chariot.

## Patentansprüche

1. Ein Verfahren zum Heißverschweißen von Bandlagen aus thermoplastischem Material, gemäß dem einem dünnen, in der Längsrichtung des Bandes zwischen zwei Bandlagen verschiebbaren Heizelement vor dem Zurückziehen und während die beiden Bandlagen zusammengepreßt werden, Heizstrom zugeführt wird, dadurch gekennzeichnet, daß:
   1) das Heizelement (16) mit einer Vor- und einer Rückbewegung zwischen den beiden Bandlagen (26, 28), die miteinander verschweißt, werden sollen, getrieben wird;
   2) der Heizstrom dem Element im wesentlichen nur während der Rückbewegung der Vor- und Rückbewegung zugeführt wird und
   3) die Bandlagen während der Länge der Vor- und Rückbewegung des Heizelementes zusammengepreßt werden und der Druck vor dem kalten Heizer während dessen Vorbewegung und hinter dem heißen Heizer während dessen Rückbewegung ausgeübt wird.

2. Ein Verfahren nach Anspruch 1, dadurch gekennzeichnet, daß der Schmelzdruck über dem erhitzten Bandgebiet nach dem Zurückziehen des Heizelementes aus diesem Gebiet aufrecht erhalten wird, bis das Verschmelzen zwischen den beiden Lagen stattgefunden hat.

3. Ein Verfahren nach Anspruch 1 oder Anspruch 2, dadurch gekennzeichnet, daß die Geschwindigkeit der Bewegung des Heizelementes während der Zufuhr von Heizstrom geregelt wird, um das Schmelzen der thermoplastischen Bandlagen ohne deren Zersetzung zu bewirken.

4. Ein Verfahren nach irgendeinem der Ansprüche 1 bis 3, dadurch gekennzeichnet, daß das Heizelement, selbst wenn es heiß ist, unter mechanischer Spannung gehalten wird.

5. Ein Verfahren nach Anspruch 1, dadurch gekennzeichnet, daß:
   1) eine Heizelement-Unteranordnung (Fig. 4), die eins oder mehrere der Heizelemente (58) trägt, anfangs gegenüber den beiden Bandlagen in einer ersten Richtung aus einer Ruhestellung in einer Stellung maximaler Verschiebung getrieben wird;
   2) vor dem Erreichen der Stellung maximaler Verschiebung ein elektrischer Strom durch das Heizelement oder -elemente zum Fließen gebracht wird, so daß das letztere an der Stelle maximaler Verschiebung eine Schmelztemperatur erreicht;
   3) die Unteranordnung dann zu einer Richtungsänderung veranlaßt und zur Rückbewegung aus der Stellung maximaler Verschiebung in die Ruhestellung angetrieben wird;
   4. der Stromfluß und die Schmelztemperatur während der Rückbewegung aufrecht erhalten werden und
   5) die Bandlagen über der Länge des Heizers zusammengedrückt werden, um damit hinter dem heißen Heizer während dessen Rückbewegung einen Schmelzdruck auszuüben.

6. Ein Verfahren nach Anspruch 5, weiter gekennzeichnet durch die Stufe des Abschaltens des Stromes und des Ermöglichens eines Abkühlens des Elementes oder der Elemente vor dem Erreichen der Ruhestellung zum Verhindern eines Schmelzens während des letzten Teiles der Rückbewegung.

7. Ein Verfahren nach Anspruch 5, weiter gekennzeichnet durch die Stufen:
   1) Auslösen einer Bewegung der Unteranordnung aus der Ruhestellung für eine Zeitspanne, die ausreicht, damit die geschmolzene Verbindung sicher wird;
   2) Bewirken einer Bewegung der Unteranordnung bei weiter abgeschaltetem Strom in einer Vorwärtsrichtung in eine Zwischenstellung, an der eine Messerkante (215) in einer Lage über einem eine Stellung zwischen den beiden Lagen einnehmenden Glied angeordnet ist, und
   3) Bewirken einer Bewegung der Messerkante, so daß die Materiallage zwischen der Messerkante und dem besagten Glied erfaßt und durchgetrennt wird.

8. Ein Verfahren nach Anspruch 7, weiter gekennzeichnet durch die Stufe des elektrischen Aufheizens der Messerkante, während sich die Unteranordnung in Richtung auf die Zwischenstellung bewegt.

9. Ein Verfahren nach Anspruch 7, dadurch gekennzeichnet, daß das besagte Glied ein besagtes Heizelement (216, 216A) ist.

10. Ein Verfahren nach Anspruch 7, dadurch gekennzeichnet, daß das besagte Glied eine Trennplatte (292) ist.

11. Ein Verfahren nach Anspruch 8, das gekennzeichnet ist durch die Stufe des Wegnehmens des Heizstromes von der Messerkante nach dem Durchtrennen und Bewirken einer Rückbewegung der Messerkante in ihre Normalstellung weg von den Lagen des geschmolzenen Materials und Verschieben der Unteranordnung wieder einmal in der Rückwärtsrichtung in ihre Ruhestellung.

12. Gerät zum Durchführen des Verfahrens nach Anspruch 1, wobei ein Wagen in der Längsrichtung der beiden Lagen aus dem Bandmaterial bewegt wird, so daß ein mit Heizstrom versorgtes dünnes elektrisches Heizelement zwischen den Lagen bewegt wird, gekennzeichnet durch Mittel zum Antreiben des Wagens mit einer Vor- und Rückbewegung in der Längsrichtung des Bandes und ein in Beziehung zu der Wagenbewegung bedienbares Steuermittel (176, 176A, 180, 182), um zu bewirken, daß das Heizelement (58) mit Strom so versorgt wird, daß die Lagen aus Bandmaterial (126, 128) nur während der Rückwärtsrichtung der Vor- und Rückbewegung zusammengeschweißt werden, und die Bandlagen miteinem Schmelzdruck zusammengepreßt werden, der vor dem kalten Heizer während dessen Vorbewegung und hinter dem heißen Heizer während dessen Rückbewegung ausgeübt wird.

13. Vorrichtung nach Anspruch 12 zum Durchführen des Verfahrens nach Anspruch 7, dadurch gekennzeichnet, daß das Steuermittel (176, 176A, 180, 182) zwecks Anschaltens des Heizstromes bedienbar ist, so daß das Heizelement (58) die Schmelztemperatur un der Stelle maximaler Verschiebung annimmt.

14. Vorrichtung nach Anspruch 13, dadurch gekennzeichnet, daß das Steuermittel (176, 176A, 180, 182) zum Abschalten des Heizstromes vor Erreichen der Ruhestellung bedienbar ist.

15. Vorrichtung nach irgendeinem der Ansprüche 12 bis 14, dadurch gekennzeichnet, daß das Mittel zum Antreiben nach Erreichen der Ruhestellung zum Bewegen des Wagens in eine Zwischenstellung, an der eine Lage (226) aus Bandmaterial neben der Schweißung durch eine Messerkante (215) abgetrennt wird, bedienbar ist.

16. Vorrichtung nach Anspruch 15, dadurch gekennzeichnet, daß die Messerkante (215) gegen ein zwischen den beiden Bandlagen angeordnetes Glied (292 oder 216, 216A) bedienbar ist.

17. Vorrichtung nach Anspruch 16, dadurch gekennzeichnet, daß das Glied ein Heizelement (216 oder 216A) ist.

18. Vorrichtung nach Anspruch 14, dadurch gekennzeichnet, daß das Glied eine mit dem Wagen hin- und herbewegbare Separatorplatte (292) ist.

# Fig. 1.

# Fig. 2.

# Fig. 3.

1

Fig.4.

Fig.5.

Fig. 6.

Fig. 7.

Fig. 8.

Fig. 9.

4